# EUROPEAN PATENT APPLICATION

(11) **EP 4 283 773 A1**
(43) Date of publication of application: **29.11.2023**
(21) Application number: 22919041.8
(22) Date of filing: 13.12.2022
(51) Int. Cl.: H01M 50/358, H01M 50/171, H01M 50/193, H01M 50/105, H01M 50/533, H01M 50/186, H01M 50/46, H01M 10/052

(54) **SECONDARY BATTERY**

(30) Priority: 04.01.2022 KR 20220001217
(71) Applicant: LG Energy Solution, Ltd., Seoul 07335 (KR)
(72) Inventor: KIM, Sang-Hun, Daejeon 34122 (KR); SONG, Dae-Woong, Daejeon 34122 (KR); KANG, Min-Hyeong, Daejeon 34122 (KR); YU, Hyung-Kyun, Daejeon 34122 (KR); LIM, Hun-Hee, Daejeon 34122 (KR); HWANG, Soo-Ji, Daejeon 34122 (KR)
(74) Representative: Plasseraud IP
(86) International application number: PCT/KR2022/020282
(87) International publication number: WO 2023/132504

(57) **Abstract**

The present disclosure relates to a secondary battery comprising an electrode assembly having an electrode lead attached thereto; a case comprising a receiving portion in which the electrode assembly is received, and a sealing portion comprising a sealant resin and configured to seal the electrode assembly; a lead film configured to cover a portion of an outer surface of the electrode lead and interposed between the electrode lead and the case; a vent area disposed in at least a portion of the case; and a vent member comprising a first layer comprising a resin having lower melting point than the sealant resin, and a second layer disposed on at least one surface of the first layer and comprising an adhesive material, the vent member being inserted into the vent area, wherein a thickness of the second layer is equal to or smaller than 5 *µ*m.

## Description

### TECHNICAL FIELD

The present disclosure relates to a secondary battery, and more particularly, to a secondary battery with a vent member.

The present application claims priority to Korean Patent Application No. 10-2022-0001217 filed on January 4, 2022 in the Republic of Korea, the disclosure of which is incorporated herein by reference.

### BACKGROUND ART

Secondary batteries having a wide range of applications and electrical properties such as high energy density are widely used in not only portable devices but also electric vehicles (EVs) or hybrid electric vehicles (HEVs) that operate by an electrical power source. The secondary batteries are gaining attention as a new source of energy with improved ecofriendliness and energy efficiency due to their advantages: remarkably reducing the use of fossil fuel and not generating by-products from the use of energy.

The types of secondary batteries being now widely used include lithium ion batteries, lithium polymer batteries, nickel cadmium batteries, nickel hydrogen batteries, nickel zinc batteries or the like.

The secondary batteries typically have a structure in which an electrode assembly including at least one unit cell of positive electrode/separator/negative electrode structure is received in a case, and a sealant resin on the inner side of the case is bonded to seal the electrode assembly.

In the case of the existing secondary batteries, fires may occur in the secondary batteries by various factors such as internal short circuits, overcharge or overdischarge or temperature control. In this instance, the fires may spread due to thermal propagation or heat transfer to the adjacent cells with rapid temperature rise in the secondary batteries.

In the event of thermal propagation, directional venting characteristics for gas venting in a direction with the increasing internal temperature of the secondary battery are required to minimize damage to the electrode caused by gas. However, the conventional secondary battery cannot induce gas venting in a specific direction.

### DISCLOSURE

### Technical Problem

Accordingly, the present disclosure is directed to providing a secondary battery with improved safety by inducing gas venting in a specific direction.

### Technical Solution

To solve the above-described problem, according to an aspect of the present disclosure, there is provided a secondary battery of the following embodiments.

A first embodiment relates to the secondary battery comprising an electrode assembly having an electrode lead attached thereto; a case comprising a receiving portion in which the electrode assembly is received, and a sealing portion comprising a sealant resin and configured to seal the electrode assembly; a lead film configured to cover a portion of an outer surface of the electrode lead and interposed between the electrode lead and the case; a vent area disposed in at least a portion of the case; and a vent member comprising a first layer comprising a resin having lower melting point than the sealant resin, and a second layer disposed on at least one surface of the first layer and comprising an adhesive material, the vent member being inserted into the vent area, wherein a thickness of the second layer is equal to or smaller than 5 *µ*m.

According to a second embodiment, in the first embodiment, the vent area may be disposed in the sealing portion.

According to a third embodiment, in the second embodiment, the vent member may be longer than the sealing portion such that the vent member is each exposed inside and outside of the case.

According to a fourth embodiment, in the third embodiment, the second layer may be disposed on at least one surface of the first layer exposed outside of the case.

According to a fifth embodiment, in any of the first to fourth embodiments, the resin having lower melting point than the sealant resin may comprise a linear low density polyethylene containing a comonomer with 6 or more carbon atoms.

According to a sixth embodiment, in the fifth embodiment, the resin having lower melting point than the sealant resin may comprise a linear low density polyethylene containing a comonomer with 6 to 8 carbon atoms.

According to a seventh embodiment, in the fifth or sixth embodiment, the linear low density polyethylene containing the comonomer with 6 or more carbon atoms may be polymerized in the presence of a metallocene catalyst.

According to an eighth embodiment, in any of the fifth to seventh embodiments, an amount of the comonomer with 6 or more carbon atoms in the linear low density polyethylene containing the comonomer with 6 or more carbon atoms may be 15 weight% or less based on 100 weight% of the linear low density polyethylene containing the comonomer with 6 or more carbon atoms.

According to a ninth embodiment, in any of the fifth to eighth embodiments, a poly dispersity index (PDI) of the linear low density polyethylene containing the comonomer with 6 or more carbon atoms may be 4 or less.

According to a tenth embodiment, in any of the fifth to ninth embodiments, a difference between a crystallization temperature of the sealant resin and a crystallization temperature of the linear low density polyethylene containing the comonomer with 6 or more carbon atoms may be 10°C or less.

According to an eleventh embodiment, in any of the fifth to tenth embodiments, the crystallization temperature of the linear low density polyethylene containing the comonomer with 6 or more carbon atoms may be 90°C to 115°C.

According to a twelfth embodiment, in any of the fifth to eleventh embodiments, a weight average molecular weight of the linear low density polyethylene containing the comonomer with 6 or more carbon atoms may be 100,000 g/mol to 400,000 g/mol.

According to a thirteenth embodiment, in any of the first to twelfth embodiments, the vent member may vent gas at 100°C to 120°C.

According to a fourteenth embodiment, in any of the first to thirteenth embodiments, the vent member may vent gas under a pressure of 1.5 atm or more.

According to a fifteenth embodiment, in any of the first to fourteenth embodiments, a maximum sealing strength of the vent member at 100°C or more may be less than 6 kgf/15 mm.

According to a sixteenth embodiment, in any of the first to fifteenth embodiments, an average sealing strength of the vent member at 100°C or more may be less than 4.5 kgf/15 mm.

According to a seventeenth embodiment, in any of the first to sixteenth embodiments, a maximum sealing strength of the vent member at room temperature to 60°C may be 6 kgf/15 mm or more.

According to an eighteenth embodiment, in any of the first to seventeenth embodiments, an average sealing strength of the vent member at room temperature to 60°C may be 4.5 kgf/15 mm or more.

According to a nineteenth embodiment, in any of the first to eighteenth embodiments, the resin having lower melting point than the sealant resin may have a melting point of 100°C to 130°C.

According to a twentieth embodiment, in any of the first to nineteenth embodiments, the adhesive material may comprise at least one of acrylic polymer, polyurethane, epoxy resin, silicone, butyl rubber or polyisobutylene.

According to a twenty first embodiment, in any of the first to twentieth embodiments, the vent area may be disposed in the sealing portion at a corner of the case.

According to a twenty second embodiment, in any of the first to twenty first embodiments, the secondary battery may be a pouch-type secondary battery.

### Advantageous Effects

The secondary battery according to an embodiment of the present disclosure comprises the vent member comprising the resin having lower melting point than the sealant resin of the case to induce gas venting in a direction toward the vent member. Accordingly, it is possible to improve the safety of the battery.

The secondary battery according to an embodiment of the present disclosure comprises the second layer comprising the adhesive material on at least one surface of the first layer to fix the position of the vent member, thereby improving the dimensional stability of the battery.

### DESCRIPTION OF DRAWINGS

The accompanying drawings illustrate an exemplary embodiment of the present disclosure, and together with the foregoing description of the present disclosure, serve to help a further understanding of the technical aspect of the present disclosure, so the present disclosure should not be construed as being limited to the drawings.
FIG. 1 is a diagram showing a secondary battery comprising a vent member without a layer comprising an adhesive material.
FIG. 2 shows a secondary battery according to an embodiment of the present disclosure, comprising a layer comprising an adhesive material in a vent member.
FIG. 3 is an enlarged diagram of a vent member according to an embodiment of the present disclosure.
FIG. 4 shows a secondary battery according to another embodiment of the present disclosure.
FIG. 5 is an enlarged view of a cross section of a vent member after sealing with a sealing portion of the secondary battery of FIG. 4.
FIG. 6 is an enlarged diagram of a vent member of a secondary battery according to another embodiment of the present disclosure.
FIG. 7 is an enlarged diagram of a vent member of a secondary battery according to another embodiment of the present disclosure.
FIG. 8 is an enlarged diagram of a vent member of a secondary battery according to another embodiment of the present disclosure.
FIG. 9 is a cross-sectional view of FIG. 2, taken along the line B-B'.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, and should be interpreted based on the meanings and concepts corresponding to technical aspect of the present disclosure on the basis of the principle that the inventor is allowed to define terms appropriately for the best explanation.

Therefore, the embodiment described herein and illustration shown in the drawings is an exemplary embodiment of the present disclosure, but not intended to fully describe the technical aspect of the present disclosure, so it should be understood that a variety of other equivalents and modifications could have been made thereto at the time that the application was filed.

A secondary battery according to an aspect of the present disclosure comprises an electrode assembly having an electrode lead attached thereto; a case comprising a receiving portion in which the electrode assembly is received, and a sealing portion comprising a sealant resin and configured to seal the electrode assembly; a lead film configured to cover a portion of an outer surface of the electrode lead and interposed between the electrode lead and the case; a vent area disposed in at least a portion of the case; and a vent member comprising a first layer comprising a resin having lower melting point than the sealant resin, and a second layer disposed on at least one surface of the first layer and comprising an adhesive material, the vent member being inserted into the vent area, wherein a thickness of the second layer is equal to or smaller than 5 *µ*m.

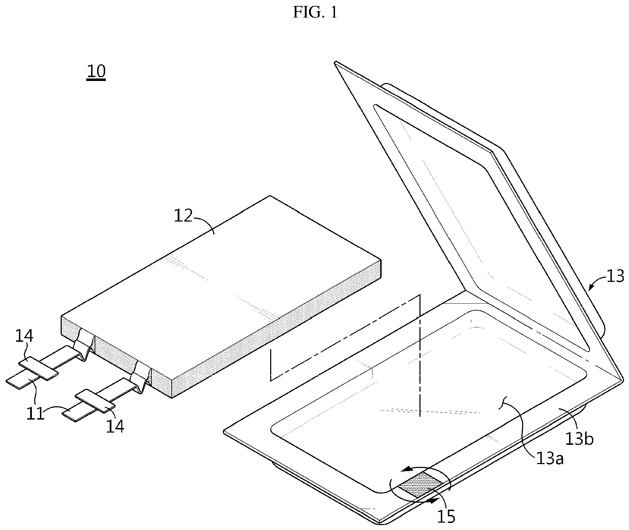

FIG. 1 shows the secondary battery comprising the vent member without the layer comprising the adhesive material. The secondary battery 10 comprises the electrode assembly 12 having the electrode lead 11 attached thereto and the case 13. The case 13 comprises the receiving portion 13a in which the electrode assembly 12 is received, and the sealing portion 13b to seal the electrode assembly 12. The secondary battery 10 comprises the lead film 14. The lead film 14 covers a portion of the outer surface of the electrode lead 11, and is disposed between the electrode lead 11 and the sealing portion 13b. The lead film 14 is disposed between the electrode lead 11 and the sealing portion 13b to help to hold the electrode lead 11 and the sealing portion 13b together.

Referring to FIG. 1, when the vent member 15 for inducing gas venting in a specific direction does not comprise the layer comprising the adhesive material, the vent member 15 is simply inserted into the case 13 and then the battery is sealed. However, when the vent member 15 is simply inserted into the case 13, the vent member 15 is not properly fixed until sealing the case 13, resulting in low dimensional stability.

The inventors found that when the layer comprising the adhesive material is present on at least one surface of the vent member, the vent member can be properly fixed even before sealing the case, thereby ensuring dimensional stability, and completed the present disclosure.

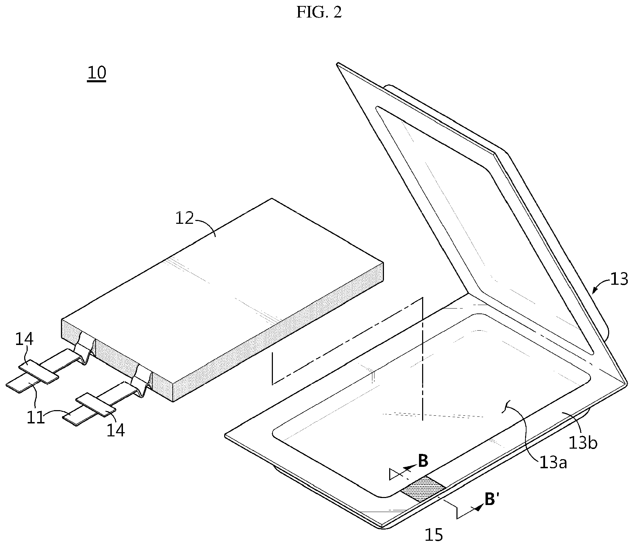

FIG. 2 shows the secondary battery according to an embodiment of the present disclosure, comprising the layer comprising the adhesive material in the vent member.

Referring to FIG. 2, the secondary battery 10 according to an embodiment of the present disclosure comprises the electrode assembly 12 having the electrode lead 11 attached thereto and the case 13.

The electrode assembly 12 includes a positive electrode plate, a negative electrode plate and a separator. The electrode assembly 12 may include the positive electrode plate and the negative electrode plate stacked in a sequential order with the separator interposed therebetween.

The positive electrode plate may comprise a positive electrode current collector of a metal foil having high conductivity, for example, an aluminum (Al) foil and a positive electrode active material layer coated on at least one surface of the positive electrode current collector. Additionally, the positive electrode plate may comprise a positive electrode tab made of a metal, for example, aluminum (Al) at an end. The positive electrode tab may be extended and protruded from said end of the positive electrode plate or joined or attached to said end of the positive electrode plate by welding or using a conductive adhesive.

The negative electrode plate may comprise a negative electrode current collector of a conductive metal foil, for example, a copper (Cu) foil, and a negative electrode active material layer coated on at least one surface of the negative electrode current collector. Additionally, the negative electrode plate may comprise a negative electrode tab made of a metal, for example, copper (Cu) or nickel (Ni) at an end. The negative electrode tab may be extended and protruded from said end of the negative electrode plate or joined or attached to said end of the negative electrode plate by welding or using a conductive adhesive.

The separator may be formed in the shape of a porous membrane between the positive electrode plate and the negative electrode plate to electrically insulate the positive electrode plate from the negative electrode plate and allow lithium ions to move between the positive electrode plate and the negative electrode plate. The separator may comprise the porous membrane, for example, using polyethylene (PE), polypropylene (PP) or a composite film thereof.

The separator may have an inorganic coating layer on the surface thereof. The inorganic coating layer may have a structure in which inorganic particles are bonded by a binder to form a pore structure (interstitial volume) between the particles.

The electrode assembly 12 may include a jelly-roll (wound) electrode assembly in which positive electrodes and negative electrodes of an elongated sheet shape are wound with separators interposed therebetween, a stack electrode assembly in which positive electrodes and negative electrodes cut into a predetermined size are stacked in a sequential order with separators interposed therebetween and a stack/folding electrode assembly in which bi-cells or full cells are wound, each bi-cell or full cell including a predetermined unit of positive electrodes and negative electrodes stacked with separators interposed therebetween.

Referring to FIG. 2, the case 13 comprises the receiving portion 13a in which the electrode assembly 12 is received, and the sealing portion 13b to seal the electrode assembly 12.

The sealing portion 13b may comprise the sealant resin, and may seal the electrode assembly 12 by bonding the sealant resin along the outer peripheral surface of the receiving portion 13a.

In an embodiment of the present disclosure, the case 13 may be a film of a multilayer structure comprising an outer layer to protect from external impacts, a metal barrier layer to block moisture and a sealant layer to seal the case.

The outer layer may comprise, for example, a film of polyesters such as poly(ethylene terephthalate) (PET), polybutyleneterephthalate, polyethylenenaphthalate, polybutylenenaphthalate and a polyester copolymer, polycarbonate or nylon, and may be formed in a single layer or in a multilayer.

The metal barrier layer may comprise aluminum, copper or the like.

The sealant layer may comprise the sealant resin, and may be formed in a single layer or in a multilayer.

The sealant resin may comprise polypropylene (PP), acid modified polypropylene (PPa), random polypropylene, an ethylene-propylene copolymer, or a mixture thereof. The ethylene-propylene copolymer may comprise an ethylene-propylene rubber and an ethylene-propylene block copolymer, but is not limited thereto.

In an embodiment of the present disclosure, the case 13 may be a pouch-type.

In an embodiment of the present disclosure, when the case 13 is a pouch-type, the case 13 may comprise an upper pouch and a lower pouch. When the case 13 comprises the upper pouch and the lower pouch, the upper pouch and the lower pouch may be placed with the sealant resins facing each other, and the sealant resins facing each other may be bonded by heat and pressure to seal the battery.

The bonding of the sealing portion 13b may include heat bonding and ultrasonic bonding, but any bonding method for the sealing portion 13b may be used without limitations.

The sealing portion 13b may undergo four sided sealing or three sided sealing at the edge of the case 13. The three sided sealing structure refers to a structure formed by forming a pouch sheet into the upper pouch and the lower pouch, folding at the boundary of the upper pouch and the lower pouch such that the electrode assembly receiving portions 13a of the upper pouch and the lower pouch lie one upon another and sealing the remaining three edges except the bent part.

Referring to FIG. 2, the electrode lead 11 may be received in the battery case 13 such that a portion of the electrode lead 11 is exposed through the battery case 13.

Referring to FIG. 2, the secondary battery 10 according to an embodiment of the present disclosure comprises the lead film 14.

The lead film 14 covers a portion of the outer surface of the electrode lead 11, and is interposed between the electrode lead 11 and the sealing portion 13b. The lead film 14 is interposed between the electrode lead 11 and the sealing portion 13b to help to hold electrode lead 11 and the sealing portion 13b together.

Referring to FIG. 2, the secondary battery 10 according to an embodiment of the present disclosure may have the vent area (not shown) in at least portion of the case 13, and the vent member 15 may be inserted into the vent area. When thermal propagation occurs, the vent member 15 may induce gas venting in the specific direction, thereby improving the safety of the battery.

In an embodiment of the present disclosure, the vent area may be disposed in the sealing portion 13b.

In an embodiment of the present disclosure, the vent area may be disposed in the sealing portion on the side except the sealing portion on the side where the electrode lead 11 is exposed.

In another embodiment of the present disclosure, the vent area may be disposed in the sealing portion on the side where the electrode lead 11 is exposed.

In another embodiment of the present disclosure, the vent area may be disposed in the sealing portion at the corner of the case 13. When the vent area is disposed in the sealing portion at the corner of the case 13, it is possible to minimize the amount of gas vented in a direction of direct contact with the electrode lead 11, i.e., a direction toward the side of the electrode lead 11, thereby further improving safety of the battery.

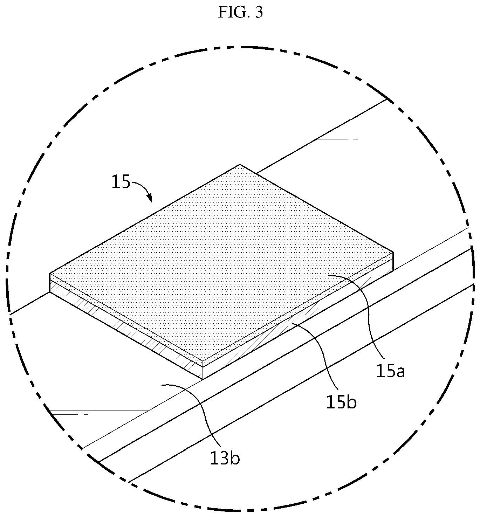

FIG. 3 is an enlarged diagram of the vent member according to an embodiment of the present disclosure.

Referring to FIG. 3, the vent member 15 comprises the first layer 15a comprising the resin having lower melting point than the sealant resin, and the second layer 15b on at least one surface of the first layer 15a and comprising the adhesive material.

As the vent member 15 comprises the resin having lower melting point than the sealant resin of the sealing portion 13b, the sealing strength at the inserted vent member 15 becomes lower than the sealing strength at the case 13 comprising the sealant resin at high temperature, thereby making it easier to achieve vent characteristics. Accordingly, it is possible to induce gas venting in the specific direction in the event of thermal propagation, thereby improving the safety of the battery.

Additionally, as the vent member 15 comprises the second layer 15b comprising the adhesive material on at least one surface of the first layer 15a comprising the resin having lower melting point than the sealant resin, it is easy to constantly fix the position of the vent member 15. That is, it is possible to reduce the positional deviation of the vent member 15. For example, the positional deviation of the vent member 15 may be 0.5 mm or less.

In an embodiment of the present disclosure, at least a portion of the vent member 15 may be disposed in the sealing portion 13b.

In another embodiment of the present disclosure, at least a portion of the vent member 15 may be exposed outside of the case 13.

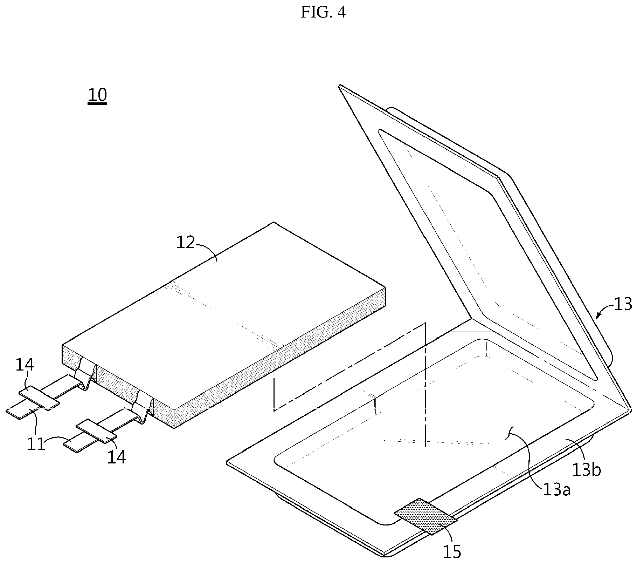

FIG. 4 shows a secondary battery according to another embodiment of the present disclosure.

Referring to FIG. 4, the vent member 15 may be longer than the sealing portion 13b so that the vent member 15 may be each exposed inside and outside of the case 13. That is, an end of the vent member 15 is disposed at the inner position of the battery than the inner end of the sealing portion 13b, and the opposite end of the vent member 15 may be disposed at the outer position of the battery than the outer end of the sealing portion 13b. When the vent member 15 has the above-described structure, it is possible to improve the vent effect.

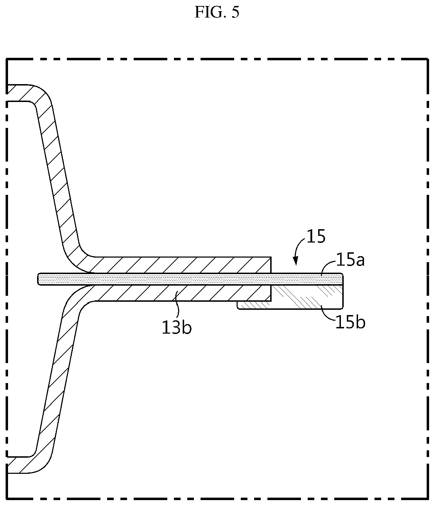

FIG. 5 is an enlarged view of the cross section of the vent member after sealing the sealing portion of the secondary battery of FIG. 4.

Referring to FIG. 5, when a portion of the vent member 15 is exposed outside of the case 13, the second layer 15b may be disposed on at least one surface of the first layer 15a exposed outside of the case 13. In the process of sealing after inserting the vent member comprising the second layer 15b into the case 13, the second layer 15b may be moved outward from the case 13. Accordingly, the second layer 15b is not inside of the case 13 and may be only outside of the case 13. That is, the second layer 15b may be only disposed on at least one surface of the first layer 15a exposed outside of the case 13. The adhesive material of the second layer 15b may accurately fix the vent member 15 to a desired location, but when stacking the sealing portion 13b and the first layer 15a, rather the adhesive material may hinder the stacking between the sealing portion 13b and the first layer 15a, and in some cases, the sealing strength between the sealing portion 13b and the first layer 15a may decrease. When the second layer 15b is disposed on at least one surface of the first layer 15a exposed outside of the case 13, it be easier to prevent the decrease in the sealing strength between the sealing portion 13b and the first layer 15a.

The vent member 15 and the case 13 may be stacked through heat bonding. In another example, the vent member 15 and the case 13 may be stacked through an adhesive, for example, a glue. In another example, the vent member 15 and the case 13 may be physically held together through a clip. In another example, at least a portion of the vent member 15 may be embedded in the film that constitutes the case 13, for example, the sealant resin.

In the present disclosure, the thickness of the second layer 15b is equal to or smaller than 5 *µ*m. For example, the thickness of the second layer 15b may be 100 nm to 5 *µ*m, or 1 to 5 *µ*m. When the thickness of the second layer 15b satisfies the above-described range, it is possible to seal the battery in normal operational condition of the battery and induce gas venting in abnormal operational condition of the battery.

When the thickness of the second layer 15b is larger than 5 *µ*m, the sealing strength between the sealing portion 13b and the first layer 15a is low due to the large thickness of the second layer 15b including the adhesive material when the sealing portion 13b and the first layer 15a are stacked. Accordingly, it is difficult to ensure a desired sealing strength in normal operational condition of the battery. For example, the maximum sealing strength may be equal to or less than 6 kgf/15 mm in normal operational condition of the battery.

In an embodiment of the present disclosure, the resin having lower melting point than the sealant resin may comprise linear low density polyethylene containing a comonomer with 6 or more carbon atoms. As the resin having lower melting point than the sealant resin comprises the linear low density polyethylene containing the comonomer with 6 or more carbon atoms, it is possible to improve the sealability of the case 13 and it may be easy to achieve vent characteristics due to the decrease in the sealing strength of the case 13 having the vent member 15 inserted therein at high temperature.

In an embodiment of the present disclosure, the resin having lower melting point than the sealant resin may comprise the linear low density polyethylene containing the comonomer with 6 to 8 carbon atoms.

In an embodiment of the present disclosure, the resin having lower melting point than the sealant resin may have the melting point of 100°C to 130°C, or 105°C to 125°C, or 110°C to 120°C. When the resin having lower melting point than the sealant resin comprises the linear low density polyethylene containing the comonomer with 6 or more carbon atoms, the linear low density polyethylene containing the comonomer with 6 or more carbon atoms may have the melting point of 100°C to 130°C, or 105°C to 125°C, or 110°C to 120°C. When the resin having lower melting point than the sealant resin has the above-described range of melting points, it may be easier to achieve vent characteristics due to the decrease in the sealing strength at the portion of the case 13 having the inserted vent member 15 at high temperature of, for example, 100°C or more.

The melting point of the resin having lower melting point than the sealant resin may be measured using Differential scanning calorimeter (DSC). For example, the melting point may be measured by increasing the temperature of a specimen from 30°C to 280°C at 10°C/min, maintaining at 280°C for 10 minutes, cooling down to 30°C at 10°C/min, and maintaining at 30°C for 10 minutes, and subsequently, increasing from 30°C to 280°C at 10°C/min and maintaining at 280°C for 10 minutes.

In an embodiment of the present disclosure, the vent member 15 may vent gas at 100°C to 120°C.

In an embodiment of the present disclosure, the vent member 15 may vent gas under the pressure of 1.5 atm or more.

In an embodiment of the present disclosure, the vent member 15 may vent gas at 100°C to 120°C under the pressure of 1.5 atm or more.

As the vent member 15 vents gas in the above-described temperature range and/or the above-described pressure condition, it is possible to seal the battery in normal operational condition of the battery and it may be easier to induce gas venting only in abnormal operational condition of the battery.

In an embodiment of the present disclosure, the maximum sealing strength of the vent member 15 at 100°C or more may be less than 6 kgf/15 mm. When the vent member 15 satisfies the above-described sealing strength in the above-described temperature range, it may be easier to achieve vent characteristics due to the decrease in the sealing strength at the portion of the case 13 having the inserted vent member 15 at high temperature of, for example, 100°C or more.

Additionally, in an embodiment of the present disclosure, the maximum sealing strength of the vent member 15 at room temperature to 60°C may be equal to or more than 6 kgf/15 mm. When the vent member 15 satisfies the above-described sealing strength in the above-described temperature range, despite the inserted vent member 15, it may be easy to ensure the sealability of the battery due to the high sealing strength in normal operational condition of the battery.

In an embodiment of the present disclosure, the maximum sealing strength of the vent member 15 at 100°C or more may be less than 6 kgf/15 mm, and the maximum sealing strength of the vent member 15 at room temperature to 60°C may be equal to or more than 6 kgf/15 mm. When the vent member 15 satisfies the above-described sealing strength, it may be easy to achieve vent characteristics due to the decrease in the sealing strength at the portion of the case 13 having the inserted vent member 15 at high temperature, and ensure the sealability of the battery due to the high sealing strength in normal operational condition of the battery.

In an embodiment of the present disclosure, the average sealing strength of the vent member 15 at 100°C or more may be less than 4.5 kgf/15 mm. When the vent member 15 satisfies the above-described sealing strength in the above-described temperature range, it may be easier to achieve vent characteristics due to the decrease in the sealing strength at the portion of the case 13 having the inserted vent member 15 at high temperature.

In an embodiment of the present disclosure, the average sealing strength of the vent member 15 at room temperature to 60°C may be equal to or more than 4.5 kgf/15 mm. When the vent member 15 satisfies the above-described sealing strength in the above-described temperature range, it may be easy to ensure the sealability of the battery due to the high sealing strength in normal operational condition of the battery.

In an embodiment of the present disclosure, the average sealing strength of the vent member 15 at 100°C or more may be less than 4.5 kgf/15 mm, and the average sealing strength of the vent member 15 at room temperature to 60°C may be equal to or more than 4.5 kgf/15 mm. When the vent member 15 has the above-described temperature range, it may be easy to achieve vent characteristics due to the decrease in the sealing strength at the portion of the case 13 having the inserted vent member 15 at high temperature, and ensure the sealability of the battery due to the high sealing strength in normal operational condition of the battery.

The sealing strength of the vent member 15 as a function of temperature may be measured by tailoring the portion of the case 13 having the inserted vent member 15 into the width of 15 mm and the length of 5 cm, spreading two ends 180° and placing in a UTM jig, and then performing a tensile test at the rate of 5 mm/min.

In this instance, the maximum sealing strength refers to the maximum value at breakage of the case 13, the average sealing strength refers to the average value when the case 13 was stretched by 8 mm in the condition of 4.5 kgf/15 mm or more in case that the maximum sealing strength is equal to or more than 4.5 kgf/15 mm, and the average value when the case 13 was stretched by 8 mm at the maximum sealing strength in case that the maximum sealing strength is less than 4.5 kgf/15 mm.

In an embodiment of the present disclosure, the linear low density polyethylene containing the comonomer with 6 or more carbon atoms may be polymerized in the presence of a metallocene catalyst. The linear low density polyethylene containing the comonomer with 6 or more carbon atoms, polymerized in the presence of the metallocene catalyst may be of advantage in terms of sealing strength and properties, compared to those polymerized in the presence of a ziegler-natta catalyst.

In an embodiment of the present disclosure, the amount of comonomer with 6 or more carbon atoms in the linear low density polyethylene containing the comonomer with 6 or more carbon atoms may be 15 weight% or less, or 12 weight% or less, or 11.8 weight% or less, or 10 weight% or less, or 9 weight% or less, or 8 weight% or less, or 7.6 weight% or less, based on 100 weight% of the linear low density polyethylene containing the comonomer with 6 or more carbon atoms. At the same time, the amount of comonomer with 6 or more carbon atoms may be 5 weight% or more, or 7.6 weight% or more, or 8 weight% or more, or 9.0 weight% or more, or 10 weight% or more, or 11.8 weight% or more, or 12 weight% or more, based on 100 weight% of the linear low density polyethylene containing the comonomer with 6 or more carbon atoms. When the amount of comonomer with 6 or more carbon atoms satisfies the above-described range, it may be easy to prevent the decrease in the sealing strength in normal operational condition of the battery due to the decrease in packing density between molecules.

The amount of comonomer with 6 or more carbon atoms may be measured by H-NMR. For example, about 10 mg of the specimen may be completely dissolved in about 0.6 mL of trichloroethylene solvent using a heat gun, sampled in a NMR tube and measured using ¹H-NMR.

In an embodiment of the present disclosure, the weight average molecular weight of the linear low density polyethylene containing the comonomer with 6 or more carbon atoms may be 100,000 g/mol to 400,000 g/mol, or 200,000 g/mol to 350,000 g/mol, or 230,000 g/mol to 300,000 g/mol. When the weight average molecular weight of the linear low density polyethylene containing the comonomer with 6 or more carbon atoms satisfies the above-described range, it is possible to improve the sealing strength in normal operational condition of the battery.

In an embodiment of the present disclosure, the poly dispersity index (PDI) of the linear low density polyethylene containing the comonomer with 6 or more carbon atoms may be 4 or less, or 3.8 or less, or 3.796 or less, or 3.5 or less, or 3.023 or less, or 3 or less, or 2.7 or less, or 2.674 or less. Additionally, the PDI may be 1.0 or more. When the PDI of the linear low density polyethylene containing the comonomer with 6 or more carbon atoms satisfies the above-described range, it is possible to improve the sealing strength and properties in normal operational condition of the battery due to the narrow molecular weight distribution.

The weight average molecular weight and the PDI of the linear low density polyethylene containing the comonomer with 6 or more carbon atoms may be measured by gel permeation chromatography (GPC) in the following condition.
- Column: Tosoh HLC-8321 GPC/HT
- Solvent: Trichlorobenzene (TCB) + 0.04% BHT (after drying with 0.1% CaCl₂)
- Flow rate: 1.0 ml/min
- Specimen concentration: 1.5 mg/ml
- Injection amount: 300 *µ*ℓ
- Column temperature: 160°C
- Detector: RI detector
- Standard: Polystyrene (fitted to a third degree polynominal)

In an embodiment of the present disclosure, the crystallization temperature of the sealant resin and the crystallization temperature of the linear low density polyethylene containing the comonomer with 6 or more carbon atoms may be similar to each other. For example, a difference between the crystallization temperature of the sealant resin and the crystallization temperature of the linear low density polyethylene containing the comonomer with 6 or more carbon atoms may be 10°C or less or 5°C or less. Additionally, the difference between the crystallization temperature of the sealant resin and the crystallization temperature of the linear low density polyethylene containing the comonomer with 6 or more carbon atoms may be 0.1°C or more. When the difference between the crystallization temperatures of the sealant resin and the crystallization temperature of the linear low density polyethylene containing the comonomer with 6 or more carbon atoms satisfies the above-described range, it is possible to improve the bonding characteristics of the sealant resin and the linear low density polyethylene containing the comonomer with 6 or more carbon atoms in normal operational condition of the battery.

In an embodiment of the present disclosure, the crystallization temperature of the linear low density polyethylene containing the comonomer with 6 or more carbon atoms may be 90°C to 115°C, or 95°C to 110°C, or 100°C to 110°C, or 105°C to 110°C. When the crystallization temperature of the linear low density polyethylene containing the comonomer with 6 or more carbon atoms satisfies the above-described range, it is possible to further improve the bonding characteristics of the sealant resin and the linear low density polyethylene containing the comonomer with 6 or more carbon atoms.

The crystallization temperature may be measured using differential scanning calorimeter (DSC). For example, the crystallization temperature may be measured by increasing the temperature of the specimen from 30°C to 280°C at 10°C/min, maintaining at 280°C for 10 minutes, cooling down to 30°C at 10°C/min, and maintaining at 30°C for 10 minutes, and subsequently, increasing from 30°C to 280°C at 10°C/min, and maintaining at 280°C for 10 minutes.

In an embodiment of the present disclosure, the vent member 15 may have a film shape.

The vent member 15 may be formed with the above-mentioned thickness. Furthermore, the vent member 15 may be inserted into the case 13 with varying insertion lengths or whereby the venting pressure and position can be controlled, according to the design.

In an embodiment of the present disclosure, the insertion length of the vent member 15 may be 5 to 20 mm.

In an embodiment of the present disclosure, when the sealing portion 13b undergoes three sided sealing, the bent surface of the case and one end of the vent member 15 may be brought into close contact with each other.

In an embodiment of the present disclosure, the shape of the vent member 15 may have a structure in which the width decreases as it goes in the outward direction of the case. When the shape of the vent member 15 has a structure in which the width decreases as it goes in the outward direction of the case, it is possible to reduce the ejection angle of gas being vented, thereby further improving the safety of the battery. In particular, when the vent member 15 is disposed in the sealing portion on the side where the electrode lead 11 is exposed or the sealing portion at the corner of the case, it is possible to minimize the amount of gas vented toward the side of the electrode lead 11, thereby further improving the safety of the battery.

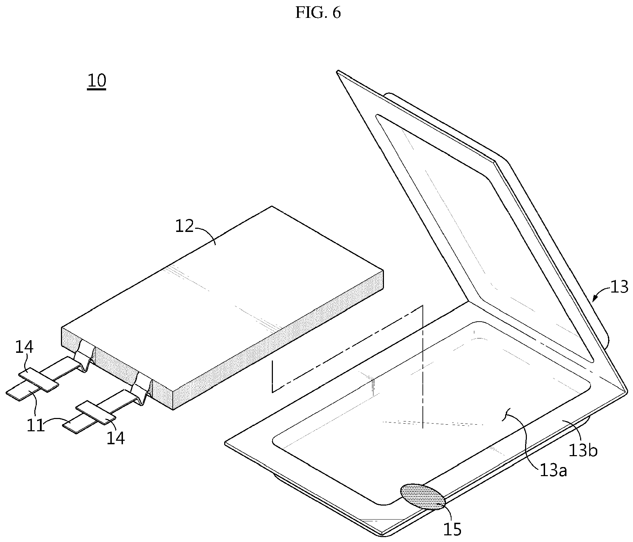

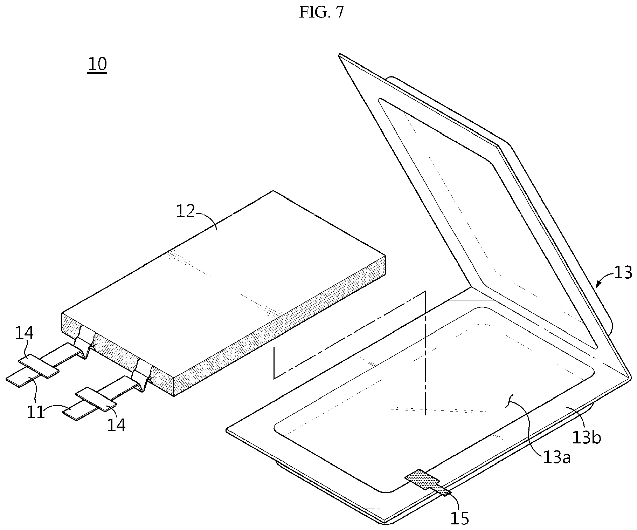

FIGS. 6 to 8 are enlarged diagrams of the vent member of the secondary battery according to another embodiment of the present disclosure.

Referring to FIGS. 6 to 7, the shape of the vent member 15 may be, for example, an oval or step shape. However, the shape of the vent member 15 may be modified to a circular, triangular or trapezoidal shape.

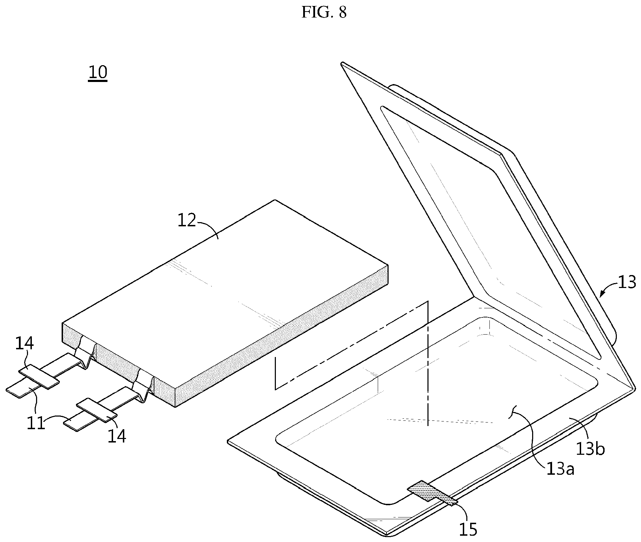

Additionally, referring to FIG. 8, the shape of the vent member 15 may have an asymmetrical step structure. When the vent member 15 is disposed in the sealing portion on the side where the electrode lead 11 is exposed or the sealing portion at the corner of the case, the steps may be formed to conform to the side of the electrode lead 11. In this case, the ejection direction of gas being vented may be far away from the side of the electrode lead 11 by the maximum distance.

In an embodiment of the present disclosure, the thickness of the vent member 15 may continuously or discontinuously decrease along the protrusion direction of the electrode lead 11.

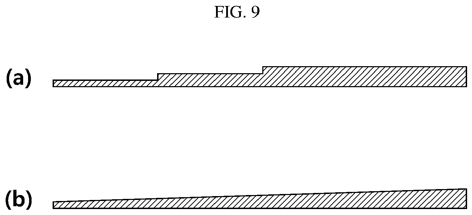

FIG. 9 is a cross-sectional view of FIG. 2, taken along the line B-B'.

Referring to FIG. 9, the thickness reduction of the vent member 15 may be discontinuous in the step shape as shown in FIG. 9(a) or may be continuous as shown in FIG. 9(b).

In an embodiment of the present disclosure, the secondary battery may be a cylindrical, prismatic or pouch-type secondary battery. Among them, the secondary battery may be a pouch-type secondary battery.

Hereinafter, the present disclosure will be described in detail based on examples to help the understanding of the present disclosure. However, the examples according to the present disclosure may be modified in many other forms, and the scope of the present disclosure should not be interpreted as being limited to the following examples. The examples of the present disclosure are provided to explain the present disclosure to those skilled in the art completely and thoroughly.

### Example 1

An upper pouch and a lower pouch, each comprising poly(ethylene terephthalate)/aluminum foil/polypropylene resin stacked in that order, were placed with the polypropylene resins facing each other, and an electrode assembly comprising positive electrode/separator/negative electrode stacked in that order was received in the pouch.

Subsequently, a pressure sensitive adhesive (PSA) (LG chem., Barrier Pressure-Sensitive Adhesives (BPSA)) was coated with the thickness of 5 *µ*m on each of two surfaces of a linear low density polyethylene (ExxonMobile, Exceed^{™}, 1018, melting point: 119°C, a ratio of the comonomer content to the total resin content: 7.6 weight%, weight average molecular weight: 289,053 g/mol, PDI: 3.023, crystallization temperature: 106°C) film containing a comonomer with 6 carbon atoms in the presence of a metallocene catalyst to manufacture a vent member.

The manufactured vent member was inserted in between the polypropylene resins, followed by heat bonding, to manufacture a secondary battery.

### Example 2

A secondary battery was manufactured by the same method as example 1 except that the linear low density polyethylene containing the comonomer with 6 carbon atoms used in example 1 was replaced with linear low density polyethylene (LG chem., Lucene^{™}, SP311, melting point: 119°C, a ratio of the comonomer content to the total resin content: 9.0 weight%, weight average molecular weight: 270,756 g/mol, PDI: 2.674, crystallization temperature: 107°C) containing a comonomer with 6 carbon atoms polymerized in the presence of a metallocene catalyst.

### Example 3

A secondary battery was manufactured by the same method as example 1 except that the linear low density polyethylene containing the comonomer with 6 carbon atoms used in example 1 was replaced with linear low density polyethylene (Dow, Elite^{™}, 5401GT, melting point: 120°C, a ratio of the comonomer content to the total resin content: 11.8 weight%, weight average molecular weight: 251,521 g/mol, PDI: 3.796, crystallization temperature: 105°C) containing a comonomer with 8 carbon atoms polymerized in the presence of a metallocene catalyst.

### Comparative example 1

An upper pouch and a lower pouch, each comprising poly(ethylene terephthalate)/aluminum foil/polypropylene resin stacked in that order, were placed with the polypropylene resins facing each other, and an electrode assembly comprising positive electrode/separator/negative electrode stacked in that order was received in the pouch.

Subsequently, linear low density polyethylene (ExxonMobile, Exceed^{™}, 1018) containing a comonomer with 6 carbon atoms polymerized in the presence of a metallocene catalyst was inserted in between the polypropylene resins, followed by heat bonding, to manufacture a secondary battery.

### Comparative example 2

An upper pouch and a lower pouch, each comprising (poly(ethylene terephthalate))/aluminum foil/polypropylene resin stacked in that order, were placed with the polypropylene resins facing each other, and an electrode assembly comprising positive electrode/separator/negative electrode stacked in that order was received in the pouch.

Subsequently, a pressure sensitive adhesive (PSA) (LG chem., Barrier Pressure-Sensitive Adhesives (BPSA)) was coated with the thickness of 20 *µ*m on each of two surfaces of a linear low density polyethylene (ExxonMobile, Exceed^{™}, 1018, melting point: 119°C, a ratio of the comonomer content to the total resin content: 7.6 weight%, weight average molecular weight: 289,053 g/mol, poly dispersity index: 3.023, crystallization temperature: 106°C) film containing a comonomer with 6 carbon atoms in the presence of a metallocene catalyst to manufacture a vent member.

The manufactured vent member was inserted in between the polypropylene resins, followed by heat bonding, to manufacture a secondary battery.

### Evaluation example 1: Measurement of sealing strength of secondary battery

The maximum sealing strength at room temperature between the sealing portion and the vent member of the secondary battery manufactured in example 1 and comparative examples 1 and 2 was measured and shown in the following Table 1.

For the maximum sealing strength, the portion of the case having the inserted vent member was tailored into the width of 15 mm and the length of 5 cm, two ends were spread 180° and held in a UTM jig, a tensile test was performed at 25°C at the rate of 5 mm/min, and the maximum value at breakage of the case was measured.

**[Table 1]**

| | Example 1 | Comparative example1 | Comparative example2 |
|---|---|---|---|
| Sealing strength at 25°C (kgf/15mm) | 10.6 | 11.1 | 1.5 |

As can be seen from the above Table 1, it could be seen that the maximum sealing strength at room temperature between the vent member and the sealing portion of comparative example 2 comprising the second layer having the thickness of more than 5 *µ*m was much lower than the maximum sealing strength at room temperature between the sealing portion and the vent member of the secondary battery manufactured in example 1 comprising the second layer having the thickness of 5 *µ*m or less.

### Evaluation example 2: Measurement of positional deviation of vent member

The positional deviation of the vent member manufactured in example 1 and the vent member manufactured in comparative example 1 was measured.

The positional deviation of the vent member was calculated by marking an insertion location of the vent member by a line on each of the sealant layer and the outer layer of the secondary battery, and attaching the vent member manufactured in each of example 1 and comparative example 1 to the sealant layer, sealing and then measuring how much the vent member deviated from the line on the outer layer.

It could be seen that the positional deviation of the vent member of example 1 was ± 0.5 mm, while the positional deviation of the vent member of comparative example 1 was ± 2 mm.

## Claims

1. A secondary battery, comprising:
an electrode assembly having an electrode lead attached thereto;
a case comprising a receiving portion in which the electrode assembly is received, and a sealing portion comprising a sealant resin and configured to seal the electrode assembly;
a lead film configured to cover a portion of an outer surface of the electrode lead and interposed between the electrode lead and the case;
a vent area disposed in at least a portion of the case; and
a vent member comprising a first layer comprising a resin having lower melting point than the sealant resin, and a second layer disposed on at least one surface of the first layer and comprising an adhesive material, the vent member being inserted into the vent area,
wherein a thickness of the second layer is equal to or smaller than 5 *µ*m.

2. The secondary battery according to claim 1, wherein the vent area is disposed in the sealing portion.

3. The secondary battery according to claim 2, wherein the vent member is longer than the sealing portion such that the vent member is each exposed inside and outside of the case.

4. The secondary battery according to claim 3, wherein the second layer is disposed on at least one surface of the first layer exposed outside of the case.

5. The secondary battery according to claim 1, wherein the resin having lower melting point than the sealant resin comprises a linear low density polyethylene containing a comonomer with 6 or more carbon atoms.

6. The secondary battery according to claim 5, wherein the resin having lower melting point than the sealant resin comprises a linear low density polyethylene containing a comonomer with 6 to 8 carbon atoms.

7. The secondary battery according to claim 5, wherein the linear low density polyethylene containing the comonomer with 6 or more carbon atoms is polymerized in the presence of a metallocene catalyst.

8. The secondary battery according to claim 5, wherein an amount of the comonomer with 6 or more carbon atoms in the linear low density polyethylene containing the comonomer with 6 or more carbon atoms is 15 weight% or less based on 100 weight% of the linear low density polyethylene containing the comonomer with 6 or more carbon atoms.

9. The secondary battery according to claim 5, wherein a poly dispersity index (PDI) of the linear low density polyethylene containing the comonomer with 6 or more carbon atoms is 4 or less.

10. The secondary battery according to claim 5, wherein a difference between a crystallization temperature of the sealant resin and a crystallization temperature of the linear low density polyethylene containing the comonomer with 6 or more carbon atoms is 10°C or less.

11. The secondary battery according to claim 10, wherein the crystallization temperature of the linear low density polyethylene containing the comonomer with 6 or more carbon atoms is 90°C to 115°C.

12. The secondary battery according to claim 5, wherein a weight average molecular weight of the linear low density polyethylene containing the comonomer with 6 or more carbon atoms is 100,000 g/mol to 400,000 g/mol.

13. The secondary battery according to claim 1, wherein the vent member vents gas at 100°C to 120°C.

14. The secondary battery according to claim 1, wherein the vent member vents gas under a pressure of 1.5 atm or more.

15. The secondary battery according to claim 1, wherein a maximum sealing strength of the vent member at 100°C or more is less than 6 kgf/15 mm.

16. The secondary battery according to claim 1, wherein an average sealing strength of the vent member at 100°C or more is less than 4.5 kgf/15 mm.

17. The secondary battery according to claim 1, wherein a maximum sealing strength of the vent member at room temperature to 60°C is 6 kgf/15 mm or more.

18. The secondary battery according to claim 1, wherein an average sealing strength of the vent member at room temperature to 60°C is 4.5 kgf/15 mm or more.

19. The secondary battery according to claim 1, wherein the resin having lower melting point than the sealant resin has a melting point of 100°C to 130°C.

20. The secondary battery according to claim 1, wherein the adhesive material comprises at least one of acrylic polymer, polyurethane, epoxy resin, silicone, butyl rubber or polyisobutylene.

21. The secondary battery according to claim 1, wherein the vent area is disposed in the sealing portion at a corner of the case.

22. The secondary battery according to claim 1, wherein the secondary battery is a pouch-type secondary battery.
